(19) **Europäisches Patentamt**
**European Patent Office**
**Office européen des brevets**

(11) **EP 4 270 279 A1**

(12) **EUROPEAN PATENT APPLICATION**

(43) Date of publication:
**01.11.2023 Bulletin 2023/44**

(21) Application number: **22169944.0**

(22) Date of filing: **26.04.2022**

(51) International Patent Classification (IPC):
***G06Q 10/06*** *(2023.01)*

(52) Cooperative Patent Classification (CPC):
**G06Q 10/06**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Buckley, Mark
81829 München (DE)**
• **Nierwetberg, Johannes
85617 Assling (DE)**

(74) Representative: **Siemens Patent Attorneys
Postfach 22 16 34
80506 München (DE)**

(54) **AUTOMATIC CLASSIFICATION OF PATENT FAMILIES AND PERSONALISED ANALYSIS OF COMPETITORS' PATENT PORTFOLIO**

(57) The present invention relates to methods and systems for an automatic analysis of competitors' patent portfolios. In particular, it relates to analyzing a large number of technological publications such as technology related documents which can be for instance published patent applications or granted patents. The analysis is performed in a customized way for a given user, as it relies on classifying the technological publications in a user personalized way. This approach aims at performing an analysis of large portfolios of technological publications - such as patent portfolios - from the point of view of a user, such that it helps him to gain insight into for instance the operations of his competitors. The result of the analysis can provide for instance the patterns in the innovation activities of the competitors or their patenting activities in various technology fields that are significant for the competitors and/or for the user. This approach can further provide an automatized monitoring of the research and technology activities of companies in a given business field, whilst also allowing the possibility to automatically sort out the various technological publications and assign them to one or several particular recipients or addressees, for instance in the user's organization, such as specific business units, departments, teams or any individual which is responsible or would have a vested interest for this technological publication and the automatic preliminary assessment of its relevance.

EP 4 270 279 A1

**Description**

Technical field

The present invention relates to methods and systems for an automatic analysis of competitors' patent portfolios. In particular, it relates to analyzing a large number of technological publications such as technology related documents which can be for instance published patent applications or granted patents. The analysis is performed in a customized way for a given user, as it relies on classifying the technological publications in a user personalized way. This approach aims at performing an analysis of large portfolios of technological publications - such as patent portfolios - from the point of view of a user, such that it helps him to gain insight into for instance the operations of his competitors. The result of the analysis can provide for instance the patterns in the innovation activities of the competitors or their patenting activities in various technology fields that are significant for the competitors and/or for the user. This approach can further provide an automatized monitoring of the research and technology activities of companies in a given business field, whilst also allowing the possibility to automatically sort out the various technological publications and assign them to one or several particular recipients or addressees, for instance in the user's organization, such as specific business units, departments, teams or any individual which is responsible or would have a vested interest for this technological publication and the automatic preliminary assessment of its relevance.

Prior art

When reviewing and assessing a larger number of technological elements in order to assess their relevance and interest for a given part or individual of the user's organization, it was up to now necessary to rely on an experienced expert to manually review the portfolios of each competitor in order to firstly assess the differences and similarities between the portfolios of these competitors and the portfolio of the user, and further, to filter and to redistribute the elements of the competitor portfolios and the corresponding analysis to recipients such as people having responsibilities in corresponding technology fields or with vested interest in the information and assessment of these elements. Indeed, as of today, there is no automated method for assessing an entire portfolio of such technological publications across a wide range of technological domains/fields. Further, there is also no personalization for such analysis of competitors innovation activities in terms of setting up automatically a classification fitting the organization of the user and using it for sector analysis and redistribution.

In more details on these two main stages of the teaching of the present invention.

Firstly, regarding the customized classification approach. With the development of communication networks such as Internet, the quantity of information available and the need to extract or retrieve relevant information from documents (such as technological publications) has gained a great importance. Indeed, the amount of data has continuously increased and there is a growing need for classifying this huge number of publications in an efficient and reliable manner. In the case of technological publications, there is also an increasing need to automatically allocate these elements per technology fields. For instance, there is a need to provide a solution for filtering and classifying the huge amount of patent publications such as patent applications and patent granted that are now available on data bases worldwide. There are some known off the shelf classification systems for such technological publications. For instance, in the case of patent documents, the International Patent Classification ("IPC") can be mentioned to illustrate such off the shelf classification. That is to say that the patent documents are assigned to at least one classification symbol which indicates the subjects or the specific area of technology to which the invention disclosed in the patent document relates. These classifications symbols are assigned by the examiners of the Patent Office in charge of receiving the patent application and prosecuting it. Search engines such as Espacenet or Google Patent can then be used to search for patent documents using this classification and additionally some keywords or search items. The first main stage of the present teaching aims at determining at least one element in the inputted technological publication. The element is related to the inputted technological publication and is of interest for the application or the user. This element can be a label, a department or any other category of element which is of interest for routing, categorizing or prioritizing the technological publication inputted in view of the responsible part/individuals of the user's organization. For instance, in the case of a granted patent, it will be assessing, categorizing or prioritizing it such that it can be sent to an interested department, such as the department responsible for the technology field. That is to say that the determined element in the technological publication can be for instance label or an internal classification of technologies corresponding to the organization of the user. By this means, the analysis and the routing of technological publication can be performed not only based on off the shelf classifications such as the above-mentioned IPC, but rather on customized classifications appropriate for fitting the user's organization. For instance, the organization of the user can be split between various business units and each business unit can be split between various technology fields corresponding to categories that correspond to the organization of the user and the organization of the business units. These categories may not correspond to the classes that exist in off the shelf classifications. The approach of the first main stage of this invention aims at ensuring that the technological publications inputted, such as patent documents, will be classified according to the classification of the user organization such that the participants of the user's organization can make a better use of the information available.

Secondly regarding the analysis of the patent portfolio of the competitor. As mentioned above, the quantity of available information in the form of technological publications such as research publications, technical articles, or patent documents such as published patent applications and granted patents, utility models or the like, has increased considerably worldwide and continues to grow day by day. As a result, it is no longer always possible for a user of this information to assess or even compare the relevance of these technological publications. This is due to the fact that the content of information can be distorted (because the publication is also a way of advertising or because the terminology is extremely abstracted), but also to the fact that the amount of available information can no longer be treated efficiently by a single expert or a small team of experts. However, for the user's organization such information is of great importance to obtain a clear and complete understanding of a technological context. As an example, it is often of interest to compare different technology portfolios with one another in order to identify technology focal points on the one hand, but also to be able to identify possible technology gaps in a particular portfolio. For instance, by this means it can be assessed whether a business field corresponding to the classification of the organization of the user is still being researched by competitors and what is its importance for such competitors. Similarly, areas where competitors may be starting to build knowledge and legal protections can be identified by the user. In other words, the task of the second main step of the present application is to determine a technological relevance of at least two technology portfolios and also to determine discrepancies and commonalities of these portfolios, based on the determined user's classification from the first main step.

Summary of the invention

The technical problem solved by the teaching of the present application is the provision of an automated computer implemented method to classify technological publications such as patent families of competitors patent portfolios and then - by means of a specific classification for the user - to extract and display patterns in this portfolio, thus allowing a detailed patent strategy analysis for the user. The classification stage aims at ensuring a customization of the analysis for the user, in that the classes used are determined based on the innovation focus areas of the user. Another important aspect of the technical problem solved is that once this classification and analysis has been performed, the technological publication such as the patent references in the competitor patent portfolio and the resulting analysis can be subsequently automatically filtered and sent to specific recipients or addressees in the organization of the user. That is to say the organization of the user can be provided with an advanced and customized monitoring and alert system on the patent activities of competitor, which automatizes the assessment, filtering and redistribution of the patent reference and analysis. This also helps the organization of the user to improve its technology and innovation activities by ensuring that all the important participants of the innovation strategy/activities in the organization are aware of the technological publications of competitors and their assessment in the framework of a portfolio comparison.

The classification stage is performed by training an algorithm such as an artificial neural network classifier to predict labels for the technological publications. Indeed, the technological publications contain text and meta data, and the classifier uses them to predict a company internal label, such as a business unit, a department, a group of individuals, a person or a project to be associated with the technological publication. Such a company internal label can be mentioned as a "mandate owner" in an organization, because the label often refers to an agent with a responsibility for a product type or technical strategy or business unit. The use of such company internal data introduces the personalization function that is desired in the teaching of the present invention.

The portfolio analysis stage automatically analyzes a set of competitor portfolios of technology publications with respect to the portfolio of the user's organization. This analysis is based on the determined classes during the first stage (and optionally in parallel also based on off the shelf classes, i.e., external sources classifications, and a matching between the two results). The analysis then defines the relative importance of the classes as well as discrepancy measures between portfolios and provide an approach for a visualization.

The solution provided is performed by means of a method according to one of claims 1 to 9, a system according to one of claims 10 to 13, a computer program according to claim 14 or a computer-readable storage medium according to claim 15.

Short description of the drawings

In the following detailed description, presently preferred embodiments of the invention are further described with reference to the following figures:

Fig. 1    illustrate a flow chart presenting a method according to the invention.

Fig. 2    illustrate a representation of a technological publication.

Fig. 3    illustrate a flow chart presenting a first main stage of a method according to the invention.

Fig. 4    illustrate a flow chart presenting a second main stage of a method according to the invention.

Fig. 5    illustrate a first variant of the invention.

Detailed description of preferred embodiments

Hereinafter, the embodiments will now be described in detail with reference to the accompanying drawings. It should be noted that the same reference numerals are used to designate the same or similar elements throughout the drawings.

It is to be noted that the disclosure cannot be limited to the embodiment in which the idea of the disclosure is presented, and another embodiment included within range of idea of another backward disclosure or the present disclosure may be easily proposed by addition, change, deletion and the like of another element.

The terms used in this specification were selected to include current, widely used general terms. In certain cases, a term may be one that was arbitrarily established by the applicant. In such cases, the meaning of the term is defined in the relevant portion of the detailed description. As such, the terms used in the specification are not to be defined simply by the name of the terms but are to be defined based on the meanings of the terms as well as the overall description of the present disclosure.

A technological publication is a publication which can be related to any technology field. It is a machine-readable document, such as a PDF or Word document which can be processed by any computing unit in an automated and efficient way. It comprises text, such as a main text or text body describing the content of the technological publication, and metadata, such as additional information including dates or identification tags. In particular, the technological publications can be patent related documents such as published patent applications or granted patents. They can also be scientific publications in journals, advertisements, utility models, job specifications and any similar publications with technical content.

A technology portfolio is a portfolio of at least one technological publication, for instance owned by a company, an individual or a group of individuals, a nonprofit organization or the like. It can comprise several types of technological publications, such as patent applications, granted patents, scientific presentations, symposium results, articles in scientific journals, etc. Alternatively, it can also comprise only one type of publications, such as only patent documents or only granted patent, etc.

A technology class is a generic term for a specific technology that summarizes certain properties of the specific technology. Example of technology classes are "charging of electric vehicles", "scalable WLAN gateways", "switch-off by temperature induction". In that framework, a technological publication is to be assigned to at least one technology class, resulting in a mapping of technological publications to technology classes.

The element to be determined in a technological publication can be a label, a business unit, a department, a team, a group of individuals or a single individual, any other category or elements of interest that can be used for routing, categorizing or prioritizing and important technological publication such as an incoming patent application or granted patent in view of responsible business unit, a department, a team, a group of individuals or a single individual in the user's organization.

Meta data are preferably information that are publicly available, so that the analysis of the competitor portfolio is based on the same data structure. The metadata can comprise any of a patent application number, a date of publication, a mention of the grant of the patent, a date of filing, a proprietor, an inventor, an applicant, a date of publication of the application and any other patent-related information. The metadata depends on the type of technological publication. The identification tags of a patent deviate from the identification tags of other technological publications. For example, some relevant names or persons of the patent are applicant, inventor and proprietor, whereas the relevant names or persons of the publication in scientific journals are the authors. Thus, the method can be applied in a flexible manner according to the specific application case.

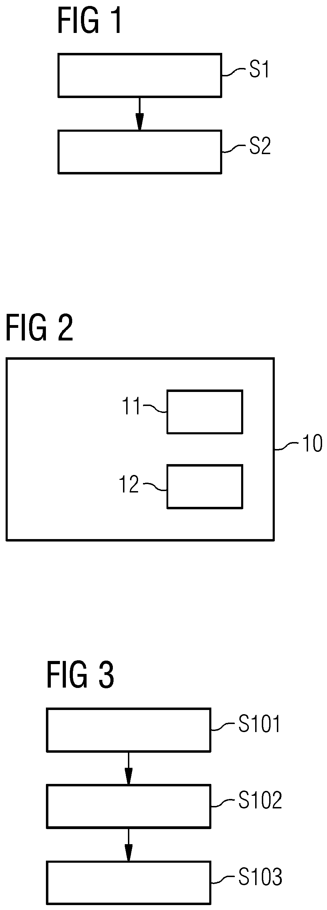

Fig.1 shows of flow diagram of a method according to the invention. The method comprises two main stages S1 and S2. The stages of this method will be explained in detail in the following description including various ways of combining them in particular sequential combinations. The steps of this method are to be mainly performed on a computer such that the method is a computer-implemented method. However, this does not exclude that some steps or input can be entirely or partially performed manually.

A first main stage S1 relates to the training of a customized classification or classifier model 34 that is to fit the structure of responsibilities or the structure of technology distribution within the organization of a user. This classification stage is performed by using a training set of technological publications to train an algorithm such as an artificial intelligence network to be subsequently used as a classifier model 34. By this means, subsequently inputted technological publications will be subject to a prediction process. That is to say that they will be classified by such a classifier model in order to classify them, i.e. for instance to provide them with a label corresponding to the structure of responsibilities or the structure of technology distribution within the organization of the user (e.g. wherein each technology is labeled with at least one label corresponding to a part of the organization of the user or a group of individuals or a single individual, the so-called "mandate owners").

A second main stage S2 relates to an automatic portfolio analysis to analyze some portfolios of technological publications (of competitors of a user for instance) with respect to the portfolio of technological publications of the user's organization. This second stage S2 can be performed using off the shelf classes for defining an analysis (i.e., comparison, white-spot analysis, etc....) and, once the result of the comparisons is obtained, to classify the results a posteriori using the prediction approach made available by the training stage S1 to label these results, such that the resulting analysis is made customized to the user's organization. Further, this allows for assigning (in other words to distribute) the technological publications to the appropriate mandate owner in the user's organization. Alternatively, the classification can be used from the beginning to label the elements of the portfolios of competitors and the portfolio of the user organization first, such that the results obtained are already classified according to the internal classification of the user organization.

Fig. 3 shows a detailed first main stage of the method according to the invention which consists in a training stage, comprising the steps S101 to S103.

In the training stage, a training data set of a plurality of technological publications 10 is received in step S101, for training the algorithm or machine learning model. As illustrated in Fig. 2, each technological publication comprises text data 11 end metadata 12. The metadata can comprise data elements of fields such as a date, a year, one or several IPC class tags. The technological publications 10 used in the training data set have the specificity that they comprise a known element 20. In other words, the technological publications 10 for training can be specified as:

TPT = (List[Text], Metadata, Element).

The known element 20, which will be the element to be determined by the machine learning model once used on technological publication which elements 20 are unknown, would be used either for marking the results in the second main stage S2 once the portfolio comparison has been performed on off the shelf classes, or to relabel the technological publications before the portfolio analysis, such that in both cases the results of the analysis and the inputted technological publications of the competitor technological portfolio can be distributed to the appropriate mandate owner in the user's organization.

The imputed raw or unprocessed inputted technological publications can be preprocessed in step S102, that is to say converted into a respective numerical presentation in order to be used for training and or prediction. In that case, the text 11 of the technological publication is preprocessed into processed text elements. The metadata does not need to be preprocessed. If the text comprises multiple elements, it can be concatenated in a sensible order for instance title plus abstract plus body. This concatenated text can be tokenized into a sequence of text fragments [W1, W2, W3, ...] by splitting on whitespace and removing punctuation. Preferably, the text fragments are words. The words can be converted to lower case. In other words, for a set of inputted technological publications, a corresponding set of word sequences is computed. The set of words which appear at least once in any inputted technological publication is determined using the set of word sequences. The resulting set of words can be referred to as the vocabulary Vocab of the technological publication 10. Each word of the vocabulary Vocab is assigned to respective unique integer index idx1, ..., idxn. Having computed the overall vocabulary Vocab, each word sequence or text fragment [W1, W2, W3, ...] is converted into a respective word index sequence [idx1, idx2, idx3, ...]. In other words, the resulting processed imputed technological publication can be specified as:

```
List[TPT] = List[(Idx_sequence, Metadata, Element)], Vocabu-
lary.
```

In a preferred embodiment, the classifier model is an artificial neural network and the element 20 is used as classification target.

The machine learning model can receive two types of metadata 12 in addition to the text 11 of the inputted technological publications 10, one single-value type, namely publication year, and one multiple-value type, namely IPC tag.

Consequently, the training data set can be specified as:

((Idx_sequence, Pub_year, List[IPC_tag]), Element)

In a preferred embodiment applicable to patent documents, different input vectors for text and for metadata can be used. For instance, one or more input vectors for metadata can be configured by the user to correspond to classes such as IPC tags, dates, etc.

In another preferred embodiment which can be combined with the previous, the machine learning model has four parts. The three input paths handle the text 11, the publication year and IPC tag, respectively.

The text 11 can use an embedding layer to pass the word sequence into the machine learning model as a sequence of word vectors. The word vectors can encode the semantics of words. The word vectors for the inputted technological publication 10 are passed to a convolutional layer, followed by a max pooling layer and two dense layers. Each of the dense layers is accompanied by a dropout layer. The series of transformations aggregates the text 11 into a representation in a hidden layer.

The metadata can also use an embedding layer to be passed into the machine learning model. These metadata embeddings are randomly initialized. Thereby, single-value metadata objects, such as the publication year, are passed to the next dense layer. The embeddings of each of the values for a given inputted technological publication 10 are averaged for multivalued metadata objects, such as the IPC tags.

The three input paths are unified using a concatenation layer, the fourth part of the model structure, which thus contains a representation of the inputted technological publication 10. This representation is passed to a final prediction layer which has as many units as there are elements. The values of this prediction layer are converted to a normalized distribution via a softmax transformation. This normalized distribution is the output of the machine learning model.

The machine learning model is trained in step S103 using machine learning algorithms or approaches, such as neural network: that it to say that for a given number of epochs the weights in the machine learning model are adjusted via back-propagation in order to minimize a given loss function. The loss function can be a categorical cross entropy.

The result of the training stage is a trained machine learning model or classifier which can provide a predicted probability distribution over the elements which occurred in the training data set. That way, when a new technological publication 10 is inputted, the trained machine learning model can transform a preprocessed technological publication 10 into such a probability distribution. The transformation can be defined as:

```
(Idx_sequence, Pub_year, List[IPC_tag]) → List[(Element,
Probability)]
```

such that the probabilities sum to one. The list of elements probabilities is the same length as the list of elements which were found in the training data set.

The model and the corresponding vocabulary Vocab can be written to a storage unit, e.g., persistent storage in order to be used in the runtime system during runtime.

For the prediction, the most likely element (the one with the highest probability of comprising the element or highest score using the machine learning model) is determined based on the probability distribution. Referring to the case of an input being a patent document, the most likely destination recipient in the user's organization can be identified. Similarly, the recipient with lower probability can also be determined. A threshold can also be configured on that score or probability such that only the technological publications with a score exceeding the predefined threshold are labeled or outputted.

This approach of the first main stage S1 allows for the automatic allocation of technological publications such as patent documents in categories that can be technological fields or any other, provided that they fit a user's organization and allow for instance for the distribution of information to appropriate mandate owner.

Fig. 3 shows a detailed second main stage of the method according to the invention which consists in an analysis stage, comprising the steps S201 to S214. In particular, the second main stage relates to a stage of determining the technological relevance of two technology portfolios, and also to determine discrepancies and/or commonalities of these portfolios.

A first step S201 relates to starting a determination of a technological relevance of at least two technology portfolios, wherein each technology portfolio comprises at least one technological publication as defined above.

In an optional step S202, an assignment of at least one technological publication from each of the at least two technology portfolios to at least one technology class is performed. The technology classes either correspond to the label/classes obtained as a result of the first main stage as seen previously or to off the shelf classes. For certain applications, it is advantageous if each technological publication is assigned to exactly one technology class, for other applications multiple assignments may be more suitable.

In a step S203, a determination of at least one intrinsic value for at least one technology class for each of the at least two technology portfolios is performed. In this context, an intrinsic value is to be understood as values associated with an importance and/or a significance for a technology portfolio within a technology class under consideration. The intrinsic value may, for example, but not exclusively, comprise the number of technological publications, it may comprise a monetary value of the underlying technologies or also of the technological publications per se, it may be based on a predetermined ranking, or it may be composed in other conceivable ways so that a certain value can be assigned to a portfolio.

In step S204, a determination of a relative importance for at least one technology class for each of the at least two technology portfolios is performed. A relative importance is a normalization that relates the value of a technology class to an underlying technology portfolio. An illustrative relative importance is an intrinsic value of a technology class divided by a maximum intrinsic value of the technology classes of a particular technology portfolio.

In an optional step S205, at least two technology portfolios from at least three technology portfolios are combined to form a cross-sectional portfolio. In this context, a cross-sectional portfolio is to be understood as a technology portfolio which represents at least two technology portfolios. This representation according to the invention may comprise, for example, a determination of a common relative importance, for example by determining a median of the respective relative significances, by determining the mean value of the respective relative significances or by determining extreme values of the respective relative significances. This enables a simpler view of a particular cross-section to reduce the number of pairwise comparisons of technology portfolios.

In a step S206, a determination of at least one portfolio discrepancy by means of the determined relative importance is performed. A portfolio discrepancy is to be understood as a measure of a difference of a technology portfolio, for example a difference of two relative significances of a technology class of different technology portfolios.

In a step S207, a determination of at least one data analogy by means of the determined relative importance is performed. A data analogy is to be understood as a measure of a commonality of a technology portfolio, for example a sum of two relative significances of a technology class of different technology portfolios.

In a step S208, a derivation of at least one technological relevance for at least one technology class is determined by means of the determined at least one portfolio discrepancy and/or the determined at least one data analogy. A technological relevance of a technology class is to be understood as an association or a function relating a portfolio discrepancy and a data analogy. The function can be chosen arbitrarily, in a simple case a technological relevance is a pairwise mapping of portfolio discrepancies to the corresponding values of data analogy.

In an optional step S209, a visualization of the technological relevance is carried out. In this context, the visualization further comprises an identification of relevant areas of technological differences and similarities for a viewer of a technology portfolio comparison and/or an identification of areas with gaps of a technology portfolio, or of technology classes which have very low valences compared to other technology classes of other technology portfolios. Depending on the rules for determining an intrinsic value and/or a relative importance and/or a portfolio discrepancy and/or a data analogy, a desired technological relevance can thereby be made directly visible to an observer, depending on the use case, in order to thereby be able to make the technological derivations and/or statements suitable for the use case.

In an optional step S210, of at least three technology portfolios at least one technology portfolio comprises a reference portfolio and the determination of the relative significances comprises a determination of at least one portfolio distance. By including a technology portfolio as reference portfolio, a comparison of at least two technology portfolios to this reference portfolio can be performed. In this context, a portfolio distance is to be understood as a quantity that combines a portfolio discrepancy with a data analogy in such a way that a statement about a similarity of technology portfolios can be made from the amount of the portfolio distance, for example about a similarity of a technology portfolio to a reference portfolio.

In an optional step S211, a determination of at least two portfolio distances is performed by means of the reference portfolio. In this way, a similarity of at least two technology portfolios to each other can be determined in relation to a reference portfolio. This enables a direct statement about a relative importance of a technology class in at least two technology portfolios with respect to a reference portfolio, for example a statement whether a first technology portfolio has a greater technological similarity to a reference portfolio than a second technology portfolio.

In an optional step S212, the determination of the at least two portfolio distances comprises a determination of a ranking of the portfolio distances. Here, a ranking is to be understood as a sorting of the portfolio distances in order to make technological similarities to a reference portfolio more quickly accessible to a user.

In an optional step S213, a determination of at least one ratio of relative meanings is performed by means of the reference portfolio. The determination of a ratio of relative meanings, for example by determining a quotient of the relative meanings of a technology portfolio and a reference portfolio, is another way to make a meaning of a particular technology accessible to a user. This ratio can also be done, for example, as a visualization using a bar chart.

A final step S214 is an end of the determination of a technological relevance of at least two technology portfolios wherein each technology portfolio comprises at least one technology element and wherein at least one technology element from each of the at least two technology portfolios is assigned to at least one technology class.

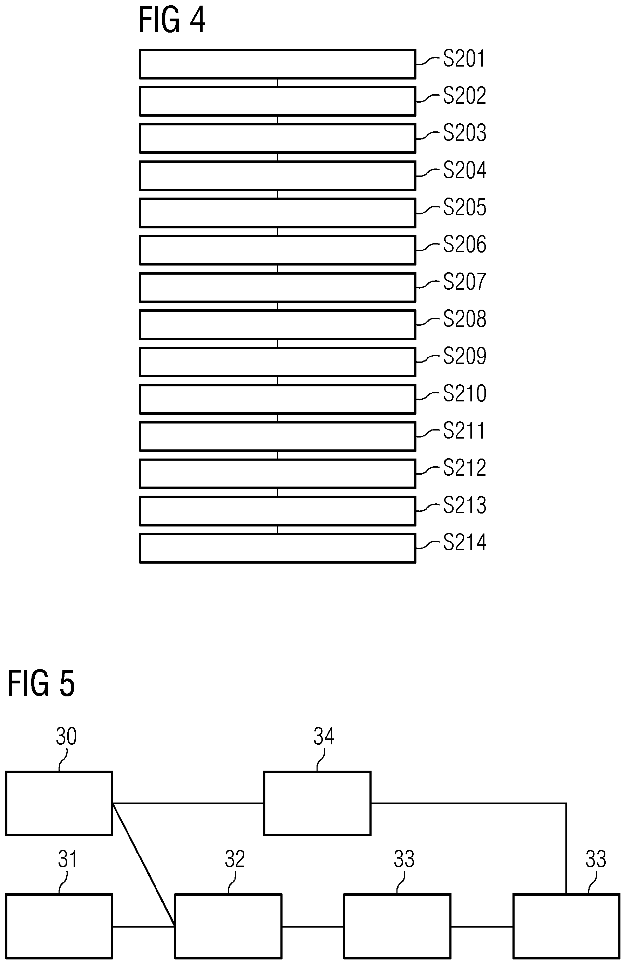

Fig. 4 shows a first variant of the invention, combining the two main stages described above. In this variant, the following steps are performed.

Firstly, a white spot analysis 32 is performed and an envelope diagram 33 is constructed as defined in the second main stage S2 described in detailed above, where in the classes used are off the shelf (so-called COTS: commercially off the shelf). The data input is the portfolio 30 of the user on the one hand and a portfolio 31 of one or plurality of competitors Ci.

Secondly, a classifier model 34 is trained independently based on the portfolio 30 of the user, on which the classes (the so-called element) are known (i.e., the mandate owners such as the business units, the departments, the group of individuals or the single individual), as defined in the first main stage S1 described above.

Thirdly, each point of the envelope diagram 33, which represents a (potentially partial) patent portfolio of a competing organization Ci, is assigned a probability distribution across the company internal mandate owner (by means of the prediction of the element/score described above).

Finally, the patent portfolios in the envelope diagram 33 are annotated with the most likely internal mandate owners in order to obtain an annotated envelop diagram 35 corresponding to the comparison analysis of the second main stage.

In a second variant of the invention, the combination of the two main stages described above is done in a different way than in the first variant of Fig. 4.

In this variant, an additional white-spot analysis east performed on the portfolio of the competing organizations Ci using the mandate owner which are assigned to them by the classifier model which has been trained on the portfolio of the user. The white spot analysis using the COTS classification remains the same.

As a result, this variant can use both the commercial external classification and the user internal classification to produce two white-spot analysis in parallel. The commercial one has a broad thematic coverage and the internal one is personalized and based on a set of classes which focus on the subjects which are of interest to the company of the user. The resulting envelop diagrams are both notated with the most probable mandate owner as in the first variant.

Once this analysis and assignment of the portfolio has been performed, several actions can be performed: outputting the technological publication to a mandate owner corresponding, storing the inputted technological publication and sending a notification of this storage to a mandate owner corresponding, displaying the technological publication at least in part to a mandate owner corresponding, and/or transmitting the technological publication at least in part to a competing unit for further processing.

The presently disclosed approach can be implemented on a large-scale system comprising several computers, servers, data bases and the like. For instance, the training stage can be performed by a first user on a first computer of the system. The system can have access to external database of publication, such that the user can get them on his computer to perform his task. The portfolio analysis stage can be performed by another or other users on other computers, configured in a similar way. The mandate owners can be other users having other computers also part of the system or connected to it. The distribution of the publications once labelled and analyzed can be sent to the computer of the mandate owners by the system, or a notification triggering a mandate owner to look for a newly arrived publication (i.e., newly labelled publication) in a data base can be sent instead. This allows the provision of an automatic monitoring system of technological publications of relevance for the user's organization.

**Claims**

1.  A computer implemented method for an automatic analysis of technological publications, comprising the steps of:

    training (S1) a customized classification model (24) using a training set of technological publications, such that the customized classification model (24) can be subsequently used to classify technological publications;
    performing (S2) an automatic portfolio analysis with respect to a second set of technological publications,
    wherein the technological publications of the second set have been previously classified using the trained customized classification model (24), or
    wherein the results of the automatic portfolio analysis of the second set of technological publications are classified using the trained customized classification model after the automatic portfolio analysis.

2.  The computer implemented method of claim 1, wherein each technological publication comprises text data (11) and metadata (12).

3.  The computer implemented method of any of the preceding claims, wherein the technological publications are patent documents and wherein the automatic analysis (S2) is performed on portfolios of patent documents.

4.  The computer implemented method of any of the preceding claims, wherein the step of training (S1) the customized classification model (24) comprises the steps of:

    receiving (S101) a training data set of a plurality of technological publications, wherein each of the technological publications of the training data set comprises a known element (20) which will be the element to be determined by the customized classification model (24) when used on a technological publication which element (20) is unknown;
    training (S103) the customized classification model (24) using a machine learning algorithm.

5. The method of claim 4, when depend at least on claim 2, further comprising the steps of:
after receiving (S101) the training data set, preprocessing (S102) the received technological publications of the training data set, by converting their text (11) into a respective numerical presentation.

6. The computer implemented method of any of the preceding claims, wherein the step of performing (S2) an automatic portfolio analysis with respect to a second set of technological publications comprises the steps of:

starting (S201) a determination of a technological relevance of the second set of technological publications, wherein the second set of technological publications corresponds to at least two technology portfolios and wherein each technology portfolio comprises at least one technological publication;
determining (S203) at least one intrinsic value for at least one technology class for each of the at least two technology portfolios;
determining (S204) a relative importance for at least one technology class for each of the at least two technology portfolios;
determining (S206) at least one portfolio discrepancy by means of the determined relative importance and/or determining (S207) at least one data analogy by means of the determined relative importance;
determining (S208) a derivation of at least one technological relevance for at least one technology class by means of the determined at least one portfolio discrepancy and/or the determined at least one data analogy.

7. The computer implemented method of claim 6, further comprising the steps of:
assigning (S202) at least one technological publication from each of the at least two technology portfolios to at least one technology class using the customized classification model (24).

8. The computer implemented method of any one of claim 6 or 7, further comprising the steps of:
combining (S205) at least two technology portfolios from at least three technology portfolios to form a cross-sectional portfolio, wherein the second set of technological publications corresponds to at least three technology portfolios.

9. The computer implemented method of any one of claims 6 to 8, further comprising the steps of:
outputting (S209) on a display a visualization of the technological relevance.

10. A computer system for performing an automatic analysis of technological publications, comprising:

a memory; and
a processor, configured to act as:

a training module adapted to train a customized classification model (24) using a training set of technological publications, such that the customized classification model (24) can be subsequently used to classify technological publications;
a portfolio analysis module adapted to perform an automatic portfolio analysis with respect to a second set of technological publications,
wherein the technological publications of the second set have been previously classified using the trained customized classification model (24), or
wherein the results of the automatic portfolio analysis of the second set of technological publications are classified using the trained customized classification model (24) after the automatic portfolio analysis.

11. The computer system of claim 10, wherein the technological publications are patent documents and wherein the automatic analysis is performed on portfolios of patent documents.

12. The computer system of any one of claim 10 or 11, wherein the training module adapted to train the customized classification model (24) further comprises:

a receiving unit adapted to receive a training data set of a plurality of technological publications, wherein each of the technological publications of the training set comprises a known element (20) which will be the element to be determined by the customized classification model (24) when used on a technological publication which elements (20) is unknown;
a preprocessing unit adapted to preprocess the received technological publications of the training set, wherein each technological publication comprises text data (11) and metadata (12), by converting their text (11) into a respective numerical presentation

a training unit adapted to train the customized classification model (24) using a machine learning algorithm.

13. The computer system of any one of claims 10 to 12, wherein the portfolio analysis module adapted to perform the automatic portfolio analysis further comprises:

a first determination unit adapted to perform a determination of a technological relevance of the second set of technological publications, wherein the second set of technological publications corresponds to at least two technology portfolios and wherein each technology portfolio comprises at least one technological publication;
a second determination unit adapted to perform a determination of at least one intrinsic value for at least one technology class for each of the at least two technology portfolios;
a third determination unit adapted to perform a determination of a relative importance for at least one technology class for each of the at least two technology portfolios;
a fourth determination unit adapted to perform a determination of at least one portfolio discrepancy by means of the determined relative importance and/or determining (S207) at least one data analogy by means of the determined relative importance;
a fifth determination unit adapted to perform a determination of a derivation of at least one technological relevance for at least one technology class by means of the determined at least one portfolio discrepancy and/or the determined at least one data analogy.

14. A computer program product for performing steps of the method according to any one of the claims 1 to 9.

15. A computer-readable storage medium, wherein the computer-readable instructions are stored therein for performing the steps of the method according to any one of claims to 1 to 9.

## FIG 1

```
┌────────────────────┐
│                    │── S1
└────────────────────┘
          │
          ▼
┌────────────────────┐
│                    │── S2
└────────────────────┘
```

## FIG 2

```
┌──────────────────────────────┐
│                              │
│          ┌──────────┐        │
│      11 ─┤          │        │
│          └──────────┘        │── 10
│          ┌──────────┐        │
│      12 ─┤          │        │
│          └──────────┘        │
│                              │
└──────────────────────────────┘
```

## FIG 3

```
┌────────────────────┐
│                    │── S101
└────────────────────┘
          │
          ▼
┌────────────────────┐
│                    │── S102
└────────────────────┘
          │
          ▼
┌────────────────────┐
│                    │── S103
└────────────────────┘
```

## FIG 4

S201

S202

S203

S204

S205

S206

S207

S208

S209

S210

S211

S212

S213

S214

## FIG 5

30

34

31

32

33

33

Europäisches
Patentamt

European
Patent Office

Office européen
des brevets

# EUROPEAN SEARCH REPORT

Application Number

EP 22 16 9944

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FABRY B ET AL: "Patent portfolio analysis as a useful tool for identifying R&D and business opportunities-an empirical application in the nutrition and health industry", WORLD PATENT INFORMATION, PERGAMON PRESS, GB, vol. 28, no. 3, 1 September 2006 (2006-09-01), pages 215-225, XP027958736, ISSN: 0172-2190 [retrieved on 2006-09-01] * cf. Introduction and section 3.2. * ----- | 1-15 | INV. G06Q10/06 |
| T | HSU PO-HSUAN ET AL: "Deep Learning, Text, and Patent Valuation", SSRN ELECTRONIC JOURNAL, 16 November 2020 (2020-11-16), XP055968100, DOI: 10.2139/ssrn.3758388 Retrieved from the Internet: URL:https://papers.ssrn.com/sol3/Delivery. cfm/SSRN_ID3758388_code455934.pdf?abstract id=3758388&mirid=1> * page 12 - page 25 * ----- | | |
| T | YVONNE SIWCZYK ET AL: "White spot analysis: The potential of patent information for research and development", TECHNOLOGY MANAGEMENT IN THE ENERGY SMART WORLD (PICMET), 2011 PROCEEDINGS OF PICMET '11:, IEEE, 31 July 2011 (2011-07-31), pages 1-9, XP031965726, ISBN: 978-1-4577-1552-5 * the whole document * ----- | | |

TECHNICAL FIELDS
SEARCHED (IPC)

G06Q

The present search report has been drawn up for all claims

| Place of search | Date of completion of the search | Examiner |
|---|---|---|
| Munich | 5 October 2022 | Reino, Bernardo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................
& : member of the same patent family, corresponding document

EPO FORM 1503 03.82 (P04C01)